# EUROPEAN PATENT SPECIFICATION

(11) **EP 3 931 463 B1**
(45) Date of publication and mention of the grant of the patent: **22.03.2023**
(21) Application number: 20707242.2
(22) Date of filing: 25.02.2020
(51) Int. Cl.: F16G 15/04

(54) **RELEASABLE MOORING CHAIN LINK**
LÖSBARES VERANKERUNGSKETTENGLIED
LIAISON DE CHAÎNE D'AMARRAGE LIBÉRABLE

(30) Priority: 25.02.2019 NO 20190262; 11.10.2019 NO 20191213
(43) Date of publication of application: 05.01.2022
(73) Proprietor: SEASYSTEMS AS, 1541 Vestby (NO)
(72) Inventor: LISLAND, Torkjell, 1440 Drøbak (NO)
(74) Representative: Bryn Aarflot AS
(86) International application number: PCT/EP2020/054874
(87) International publication number: WO 2020/173925

(56) References cited:
- US-A- 5 940 943
- US-A1- 2010 229 364

## Description

### Technical Field

The present invention relates to a releasable mooring chain link.

### Background Art

Releasable chain links are known in a wide variety for different onshore applications. However, the present applicant does not know of any releasable chain links that are suitable for use in a mooring chain below sea level. The link preferably has an external geometry that enables the link to fit in the pocket of a chain wheel, such as used in a chain winch.

US4060978 discloses a chain link particularly useful for draglines. The chain link comprises separately arranged U-shape element and a pin. The pin is adapted to be installed in the U-shaped element. The pin is releasably connected to the U-shaped element.

KR201601444132 relates to a link for a chain connection, the chain link comprises a C shaped part and a cover portion that is attached to a second cover part. The second cover part is again attached to the C shaped part and provides the opening and closing of the cover portion. The cover portion is releasably attached the C-shaped part on both ends.

JPH08261293 relates to a connection tool that with a lock that can be opened and closed by moving a lock mechanism arranged on the connecting tool. US2007186393 relates to a carabiner comprising a C-shaped part and a link adapted to close the carabiner. None of the JPH08261293 or the US200716393 have a dimension to provide a connection between mooring chain links.

Finally, the US2010306974 A1 discloses a purse ring engageable with a bridle line of a seine during deep-sea fishing operations and a manufacturing method of the same.

### Summary of invention

The primary object of the present invention is to provide a releasable mooring chain link that can be easily coupled to or released from a chain while being subsea and is shaped to fit into a chain pocket of a chain wheel. This is achieved by a releasable mooring chain link according to the subsequent claim 1 and the method of claim 14.

Preferable embodiments of the invention are set out in the accompanying dependent claims.

### Brief description of drawings

An exemplary embodiment of the invention will now be described, referring to the drawings in which:
Figure 1 shows a first embodiment of a releasable mooring chain link according to the invention in a released state and suspended from a wire sling,
Figure 2 shows the link of figure 1 in a coupled state,
Figure 3 shows the link of figure 1 in an open state, ready to be released,
Figure 4 shows the link of figure 1 in a state suspended from a wire sling and ready to be disengaged from the chain,
Figure 5 shows the link of figure 1 as it is being disengaged from the chain,
Figure 6 shows the link of figure 1 completely disengaged from the chain,
Figure 7 shows a second embodiment of a releasable mooring chain link according to the invention,
Figure 8 shows the link of figure 7 operated by an ROV tool,
Figure 9a shows the link of figure 7 in a coupled state,
Figure 9b shows the link of figure 7 in an open state, ready to be released,
Figure 9c shows the link of figure 7 as it is being disengaged from the chain, and
Figure 9d shows the link of figure 7 completely disengaged from the chain.

### Detailed description of the invention

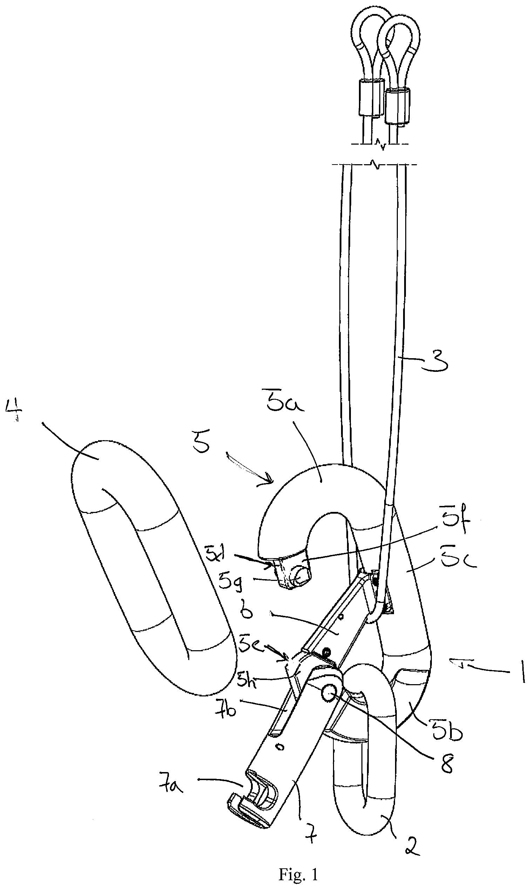

Figure 1 shows a first embodiment of a releasable mooring chain link 1. The link 1 is attached to a chain link 2 of a lower part of a mooring chain, i.e. only the uppermost end link 2 is shown. The mooring chain link 1 is suspended in a wire sling 3. A lowermost chain link 4 of an upper part of the mooring chain is also shown, i.e. only the lowermost link 4 is shown.

The releasable link 1 of the invention is generally ring shaped with one side capable of being opened and closed. In a preferred embodiment it comprises a bow 5 having two opposing U-shaped parts 5a, 5b and a straight connecting part 5c interconnecting a respective leg of the U-parts 5a, 5b.

A web 6 extends between the connecting part 5c and a free leg 5e of a U-shaped part 5b.

The link has preferably an oblong shape.

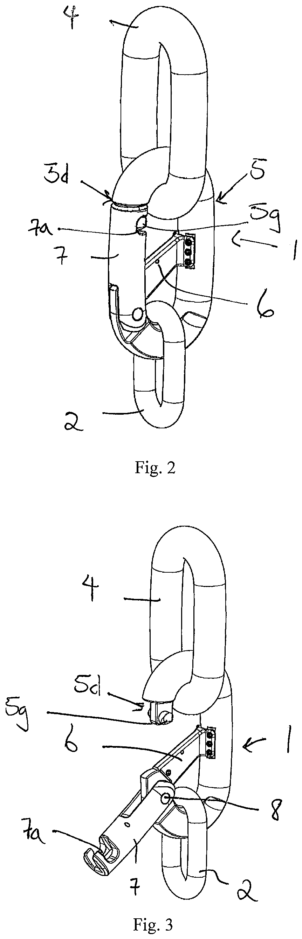

A bolt 7 is hingedly attached to the outer end of the free leg 5e. In a closed condition of the link 1, the bolt extends between the free leg 5e of the U-shaped part 5b and the free leg 5d of the U-shaped part 5a. When in the closed condition, as shown in figure 2, the U-shaped parts 5a, 5b, the straight connecting part 5c and the bolt 7 form a complete link 1 with a shape similar to the chain links 2 and 4.

The outer end of the free leg 5d has a narrower part 5f with a peg 5g on each lateral side (only one visible). The pegs 5g are shaped to receive a respective notch 7a at the outer end of the bolt 7.

The complementary shapes of the bolt 7 end and the free leg 5d end may also be different, such as the pegs can be formed at the end of the bolts and the notches at the end of the free leg. A hook may be formed on one of the ends, which fits into a pocket at the opposite end. The person of skill would realize many different ways of forming a complimentary interface that can transfer tension, as explained below.

At the hinged side of the bolt 7, the bolt has a slit 7b which received a narrower section 5h of the free leg 5e. A pin 8 secures the bolt 7 to the leg 5e.

The web 6 preferably extends obliquely relative to the transverse axis of the link 1, so that when in use and oriented with the longitudinal axis vertically, the connection of the web 6 to the straight connecting part 5c is at a higher vertical altitude than the connection with the free leg 5e. This oblique orientation acts to displace the wire sling 3 into the corner between the web part 6 and the straight connecting part 5c when a pull is exerted on the sling 3.

The web 6 may be attached to the straight connecting part 5c and the free leg 5e by bolts, as shown. This will facilitate the attachment of the releasable link 1 to the lower mooring chain. However, it is also possible to weld the web 6 in place after the link 1 has been inserted through the end link 2 of the mooring chain.

When in the closed condition, as shown in figure 2, and when tension is exerted on the releasable link 1 through the links 2 and 4, the releasable link 1 will be given a slight elastic deformation so that the pegs 5g exerts a pull on the bolt 7. This will lock the bolt 7 to the pegs and prevent the bolt 7 from being released from the free end 5d. The tension through the link 1 will also be split between the straight connecting part 5c and the bolt 7. This makes for a releasable link 1 that is weaker compared to the links 2 and 4, which are coupled thereto, however will be strong enough for certain use of the releasable link.

The functioning of the releasable link 1 will now be explained, referring to figures 2-6, which shows a sequence of disconnecting the link from the upper mooring chain part.

In figure 2 the releasable link 1 is closed and tension is applied between the upper and lower mooring parts.

Figure 3 shows the releasable link 3 in an open condition. To bring the link into this condition, the tension between the upper and lower mooring chain parts have to be relieved. This is suitably done by inserting a wire sling 3 (fig. 1) into the releasable link 1 below the web 6. Any pulling element that can relieve the tension between the parts of the mooring chain can be used instead of a wire sling, such as a hook and chain or a wire permanently attached to the link 1.

Another possibility for bringing the link into the open condition is when the weight of the lower mooring chain is lowered, for instance to the dead weight of a chain. This may for instance happen when excessive chain parts are pulled onto the vessel so that the weight of the remaining lower chain parts are relieved. It is also possible to remove chain parts or relieve the weight of the lower mooring chain in other ways to reduce the weight and thus bring the link to an open position

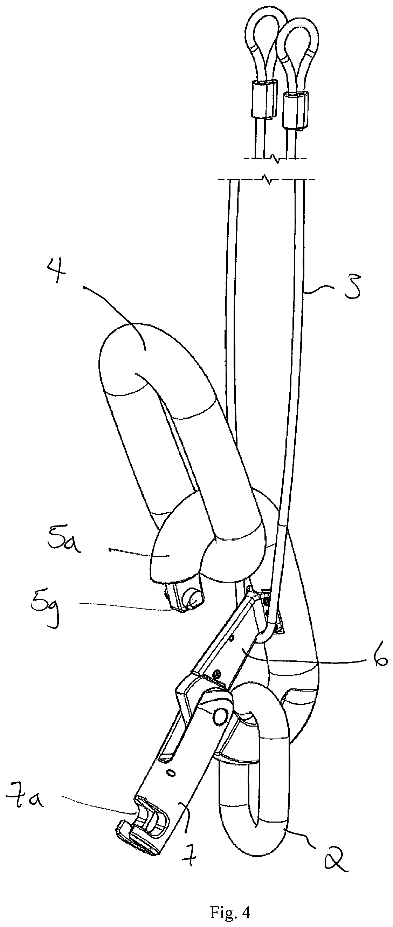

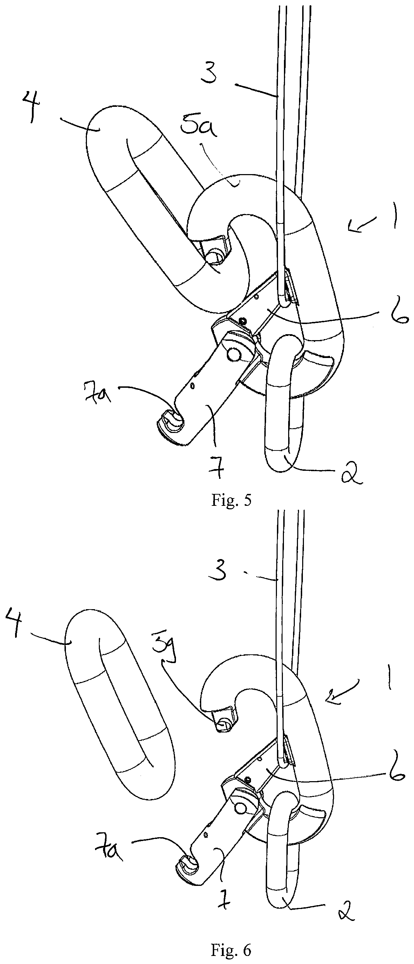

When the link is to be disconnected from the upper mooring chain, first a safety hatch or pin (not shown), which secures the bolt to the free end 5d, is released. When thereafter the tension is relived from the upper link 4 by the wire sling 3, the releasable link 1 will, due to the point of attack from the wire sling 3, tip slightly towards the side having the bolt 7. This tipping may be sufficient for the bolt 7 to fall out of the closed position and turn about the hinge to the open position, as shown in figure 4. If it does not fall out, such as due to friction or fouling, a few jerks on the wire 3 will usually be sufficient. If it still does not fall out, the lifting of the releasable link 1 by the wire sling 3 may continue until the upper link 4 meets the web 6 and slides down slope of the web 6 and hits the bolt 7, as shown in figure 5. The weight of the link 4 will open the bolt 7 and the upper link 4 will fall out of the releasable link 1, as shown in figure 6.

The connection of the releasable link 1 to the upper link 4 can be done in pretty much the opposite sequence, except that the assistance of an ROV or a diver is an advantage.

The releasable link 1, attached to the end link 2 of the lower mooring chain, is guided by the wire sling 3 and with the bolt 7 in the open position towards the end link 4 of the upper chain. The free leg 5d is fed into the link 4 and the wire sling 3 with the releasable link 1 is lowered until the end link 4 is resting within the upper U-shaped part 5a of the releasable link 1 without imparting any substantial tension on the releasable link 1. While in this position, the bolt 7 is brought into the closed position. To perform this, the assistance of an ROV or a diver is required if the link 1 is subsea. If it is above the sea, the bolt 7 can be swung into the closed position by a member of the crew. In this position the safety hatch or pin may again be engaged.

As soon as the bolt 7 is in the closed position, the wire sling 3 is lowered until tension is applied on the releasable link 1. Further, the weight of the lower chain parts 2 are increased to tension the releasable link 1. This will effectively lock the bolt 7 in place, as described above.

It is conceivable, in an alternative embodiment, that the bolt 7 is hinged at its upper end instead of its lower end. In such an embodiment the bolt may fall into the closed position by its own weight after the releasable link 1 has been attached to the end link 4 of the mooring chain. However, in this embodiment, assistance by an ROV or diver may be required to release the link 1.

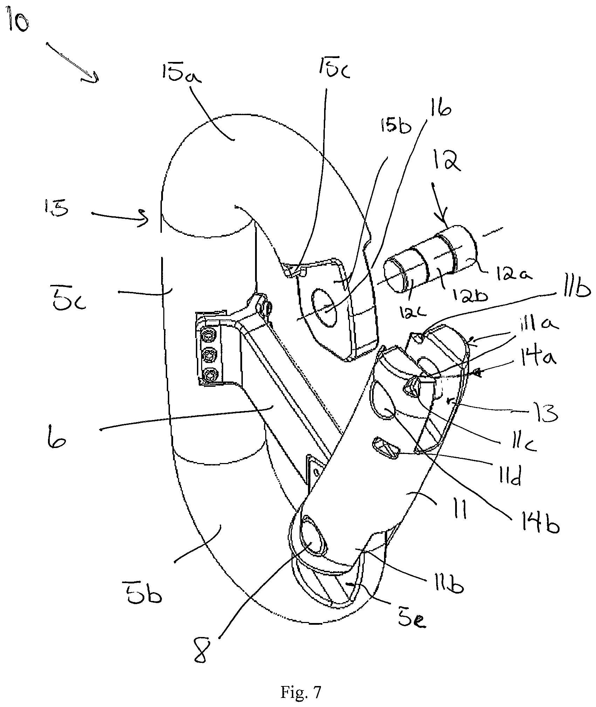

Figure 7 shows a further embodiment of a link 10 according to the invention. The link 10 differs from the first embodiment in the connection of the bolt and bow to form the closed link This will be further described below. For simplicity, the features that are equal in the embodiments have the same reference number. This embodiment of the link 10 is suitable for higher loads than the first embodiment. It has also a more robust design than the first embodiment. A further advantage of the second embodiment is that the risk of unintentional opening of the link 10 is highly reduced.

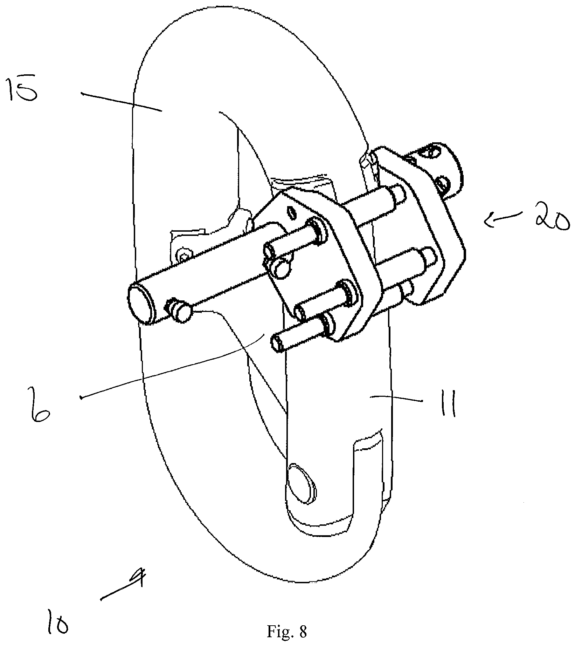

The releasable link 10 is generally ring shaped with one side capable of being opened and closed. The link 10 of the second embodiment is also preferably oblong similar as the first embodiment. The link 10 comprises a bow 15 and a bolt 11 hingedly connected to each other. In a preferred embodiment, the bow 15 comprises two opposing U-shaped lower and upper parts 5b, 15a and a straight connecting part 5c interconnecting a respective leg of the U parts 15a, 5b in a similar way as in the first embodiment. The bow may also be made as one continuous element where the elements 15a, 5c, 5b forms an integrated piece. (This is illustrated in figure 8)

The link 10 further comprises a wedge 6 as described in the first embodiment. This wedge 6 may be connected to the releasable link 10 in the same way as described in the first embodiment.

The bolt 11 is in a first end 11b hingedly attached to the link 10 at a free 5e of the U-shaped part 5b or the bow 15 in the same way as described in the first embodiment. The bolt 11 is secured to the bow 15 through a pin 8 or other securing means that allows a hinged connection between the bolt 11 and the bow 15. The bolt 11 further has an opposite second end 11a adapted to connect with a free leg 15b of the U-shaped upper part 15a to form a closed connection.

This closed connection differs from the first embodiment and will be further described below. The free leg 15b or the U-shaped upper part 15a of the bow 15 being formed by cut outs on both sides of the free leg 15b. The free leg 15b thus has a narrower rectangular-shaped dimension as shown in figure 7. Other designs are however possible as long as the shape is able to form a complete link when engaged with the bolt 11. The free leg 15b further comprises a through hole 16 extending lateral through the free end of the free leg 15b.

The U-shaped upper part 15a may also have a protrusion 15c. The protrusion is extending from the cut-out region of the U-shaped upper part 15 facing the bolt 11 when mated with the bolt 11.

The bolt 11 shown in the figure 7 has a slit 13 formed by two outwardly extending parts 11a on the second end. The slit 13 is adapted to receive the narrower free leg 15b of the U-shaped upper part 15a when the bolt is engaging with the bow 15 at this part 15a. The bolt has further a through hole 14a, 14b extending in the lateral direction of each of the extending parts 11a. when the bolt 11 is engaging with the bow, the lateral through holes of the free leg 16 and the lateral through holes of the bolt 14a, 14b are aligned transversely. This makes it possibility to receive a pin 12 in the through holes 14a, 14b, 16 to secure the connection between the bolt 11 and the bow 15. The bolt 11 may also have notches 11b arranged at the top of the extending parts 11a. The notches 11b are complementary to the protrusions 15c and in contact when the bolt 11 is connected to the bow 15 at the upper part 15a. There may also be only one protrusion engaging with a notch, more than two or none at all. These being embodiments within the invention. The protrusion (s) 15c and notch (es) 11b being beneficial in that they may control the position of the bolt related to bow 15 to ease the alignment of the through holes 14a, 14b, 16. The engagement of the protrusions and notches will together with the pin 12, will also prevent any movement of the bolt 11 and bow 15 with respect to each other when engaged with each other to form a closed connection.

The pin 12 is shown in the figure 7 as a separate piece that is adapted to be inserted into the through holes 14a, 14b, 16 when these are aligned. The pin 12 as shown in the figure comprises three portions with different diameters. A first portion 12c adapted to engage firstly with the through holes 14a, 14b, 16. A second portion 12b arranged next to the first portion and is adapted to engage secondly with the through holes 14a, 14b, 16 and a third portion 12a that is arranged next to the second portion 12b and is adapted to secure the pin 12 in the connection acting as a stop mechanism for the pin 12. The first, second and third portion having different diameters. The first portion 12c having the smallest diameter and the third portion 12a having the largest diameter. The holes 14a, 14b are arranged so that the hole 14a has a larger diameter than the hole 14b. this results in that the first portion 12c of the pin 12 fits in hole 14b and the third portion 12a fits in the hole 14a when engaged. The second portion 12b of the pin 12 being configured to be the portion arranged in the through holes 16 when engaged. The pin has a small clearance when unloaded. This means that the diameter of each part of the pin 12 are slightly smaller than the respective opening of the through holes 14a, 14b, 16. When the link 10 is loaded, the pin 12 will get in contact with the surface of the through holes 14a, 14b, 16. If the pin 12 gets damaged, it is easier to remove the damaged pin if the first portion 12c and second portion 12b has a smaller diameter. It is also easier to insert the pin 12 into the through holes when the diameter of the first portion 12c is smaller than the through holes 14a, 14b, 16. The design of the pin 12 is only an example. There might be more than three portions with different diameter or less than three portions.

The through holes 16, 14a, 14b of respectively the extending bolt parts 11a and the free leg 15b, and the pin constituting a secure mechanism 12, 14a, 14b, 16 of the releasable link 10.

The bolt 11 may also have further notches 11c, 11d arranged in the outwardly extending parts 11a. These further notches are beneficial in cooperate with an ROV tool 20 (figure 8) for installing or removing the pin 12. The ROV tool 20 may have complementary arrangement to the further notches 11c, 11d in order to land or engage with the bolt 11.

Figure 8 shows an ROV tool that is engaging/landed on the link 10 to install or remove the pin 12. It is to be noted that the ROV tool 20 can be turned 180 degrees in order to accommodate both sides. However, the pin may only be fitted into the holes 14a, 14b, 16 through one side. The ROV tool 20 may be turned when removing the pin 12.

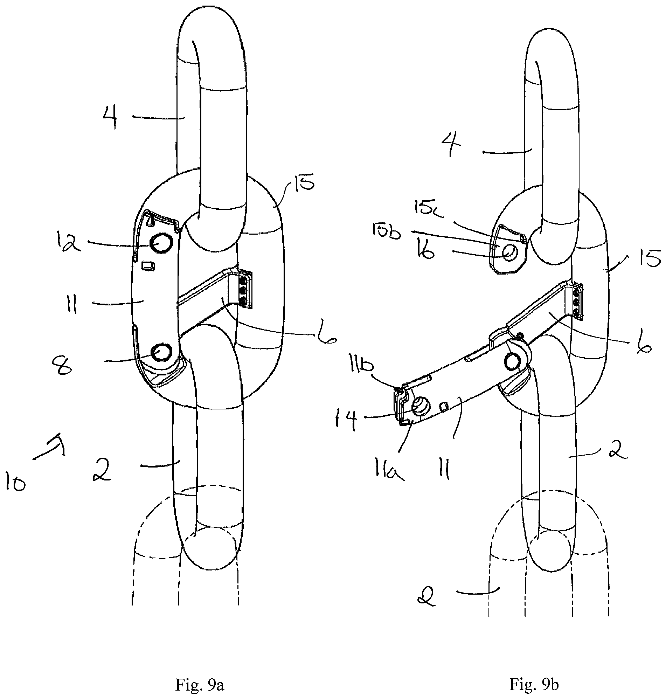

Figure 9a-9d shows the steps of disengaging an end link 4 from the link 10 according to the second embodiment.

Figure 9a shows the link 10 according to the second embodiment in a closed position where the end link 4 is attached to the releasable link 10. In the closed position the bolt 11 is connected to the free leg 15b of the U-shaped upper part 15a. The connection being secured by the pin 12 that is inserted into the through holes 14a, 14b, 16 in the bolt 11 and bow 15.

Figure 9b shows the position where the pin 12 has been removed, for instance by the ROV-tool 20. The bolt 11 is rotated to an open position. In this position, the free leg 15b of the bow 15 and the outwardly extending parts 11a of the bolt 11 are disengaged from the bow 15. The end link 4 is in this position allowed to be removed from the link 10. As for the releasable link 1 of the first embodiment 3, the mooring parts 12, 14a, 14b, 16 have to be relieved in order to detach the bolt 11 from the bow 15. The wire sling 3 as disclosed in figure 1 or the decreasing weight of the lower mooring chain parts may be used in the second embodiment as well.

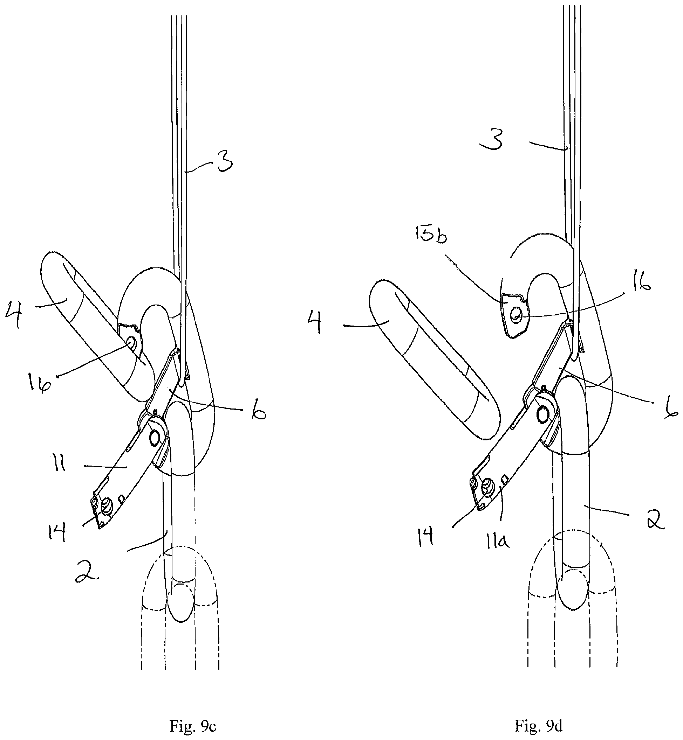

Figure 9c and 9d shows the steps of removing the end link 4 from the releasable link 10. The steps of attaching or removing the end link 4 to the releasable link 10 may be performed in a similar way as described in the first embodiment except from the secure mechanism 12, 14a, 14b, 16 that connects the bow 15 and bolt 11 together when positioned in the closed position.

## Claims

1. A releasable mooring chain link (1, 10) to be suspended on a wire sling (3), said releasable mooring chain link (1, 10) having a generally ring-shaped configuration (5, 15) with one side of the link (1, 10) capable of being opened or closed by a bolt (7, 11), and a web (6) extending transverse within said ringshape to connect opposite sides of said link (1, 10), wherein
said mooring chain link (1, 10) comprises a bow (5) having two opposing U-shaped parts (5a, 5b) and a straight connecting part (5c) interconnecting a respective leg of the U-parts (5a, 5b),
said web (6) extends obliquely relative to a transverse axis of said link (1, 10),
**characterized in**
**that** in use when a mooring chain is attached to the releasable link (1, 10) in a position between the U-shaped part (5a) of the releasable link (1, 10) and the web (6) this oblique orientation of the web (6) acts to displace the wire sling (3) into the corner between the web part (6) and the straight connection part (5c) when a pull is exerted on the sling (3) such that when a lifting force from the sling (3) is applied to said web (6), the link (1, 10) will tip towards the side of the link (1, 10) having the bolt (7, 11).

2. The releasable mooring chain link (1, 10) according to claim 1, wherein said bolt (7, 11) being hingedly attached in one end to a bow (5, 10) forming the ring-shaped configuration.

3. The releasable mooring chain link (1, 10) according to claim 2, wherein said link (1, 10) further comprising a secure mechanism (12, 14a, 14b) adapted to secure the bolt (7, 11) to the bow (5, 15) of the link (1, 10) when the link (1, 10) being in a closed position.

4. The releasable mooring chain link (1, 10) according to any of the preceding claims, wherein said bolt (7, 11) is hinged at a first end to a free leg (5e) of a U-shaped part (5b) of said link (1, 10), and the opposite second end (7a, 11a) of said bolt (7, 11) is adapted to be received by a complementary interface (5f, 15b) on a free end of an opposite U-shaped part (5a, 15a).

5. The releasable mooring cain link (1, 10) according to any of the claims 1-4, wherein said secure mechanism (12, 14, 16) being a pin (12) adapted to be inserted in through-holes (14, 16) arranged in the complementary interfaces (11a, 15b), respectively.

6. The releasable mooring chain link (1, 10) according to claim 5, wherein the pin (12) being shaped as an elongate member having at least two diameters (12a, 12b, 12c).

7. The releasable mooring chain link (1, 10) according to any of the claims 4-6, wherein the pin (12) being installed or removed by an ROV tool.

8. The releasable mooring chain link (1, 10) according to any of the claims 4-6, wherein the bow (15) comprises at least one protrusion (15c) and the bolt (11) comprises at least one notch (11b), said at least one notch /11b) and said at least one protrusion (15c) being arranged so that they mate with each other when the bolt (11) and the bow (15) are engaged in the closed position.

9. The releasable mooring chain link (1, 10) according to any of the preceding claims, wherein said bolt (7) is hinged at one end to a free leg (5e) of a U-shaped part (5b) of said link (1), and at the opposite end (7a) of said bolt (7) is received by a complementary interface (5f) at an opposite free leg (5d) of an opposite U-shaped part (5a), which is capable of transferring tension between the opposite free leg (5d) and the bolt (7).

10. The releasable mooring chain link (1, 10) according to claim 9, wherein the interface (5f, 7a) comprises a pair of pegs (5g) at the end of a free end (5d) of the bow (5) and a pair of complimentary notches (7a) at the end of the bolt (7).

11. The releasable mooring chain link (1, 10) according to claim 10, wherein the link (1) is elastically deformable and that when deformed the interface (5f, 7a) locks the free end (5d) and the bolt (7) in a firm grip preventing opening of the link (1).

12. The releasable mooring chain link (1, 10) of any of the preceding claims, wherein the web (6) is bolted to the releasable link (1, 10) at both ends.

13. The releasable mooring chain link (1, 10) according to any of the preceding claims, wherein the link (1, 10) has an oblong shape.

14. Method for maintaining a releasable mooring chain link (1, 10) closed according to any one of the claims 1-13, wherein the method comprising the step of
- adding weight to the link (1) in order to elastically deform the link (1) to lock the ring-shaped configuration and the bolt (7) together at the respective free end or
- securing the ring-shaped configuration (15) and the bolt (11) together at the respective free end with a secure mechanism (12, 14, 16).

## Patentansprüche

1. Lösbares Ankerkettenglied (1, 10) zum Aufhängen an einer Drahtschlinge (3), wobei das lösbare Ankerkettenglied (1, 10) eine im Allgemeinen ringförmige Konfiguration (5, 15) aufweist, wobei eine Seite des Glieds (1, 10) durch einen Bolzen (7, 11) geöffnet oder geschlossen werden kann, und einen Steg (6), der sich quer innerhalb der Ringform erstreckt, um gegenüberliegende Seiten des Glieds (1, 10) zu verbinden, wobei
das Ankerkettenglied (1, 10) einen Bügel (5) mit zwei gegenüberliegenden U-förmigen Teilen (5a, 5b) und einen geraden Verbindungsteil (5c) aufweist, der einen jeweiligen Schenkel der U-förmigen Teile (5a, 5b) miteinander verbindet,
wobei der Steg (6) sich schräg zu einer Querachse des Glieds (1, 10) erstreckt,
**dadurch gekennzeichnet, dass** im Gebrauch, wenn eine Ankerkette an dem lösbaren Glied (1, 10) in einer Position zwischen dem U-förmigen Teil (5a) des lösbaren Glieds (1, 10) und dem Steg (6) befestigt ist, diese schräge Ausrichtung des Stegs (6) dazu führt, dass die Drahtschlinge (3) in die Ecke zwischen dem Steg (6) und dem geraden Verbindungsteil (5c) gedrängt wird, wenn ein Zug auf die Schlinge (3) ausgeübt wird, so dass, wenn eine Hebekraft von der Schlinge (3) auf den Steg (6) ausgeübt wird, das Glied (1, 10) in Richtung der Seite des Glieds (1, 10) mit dem Bolzen (7, 11) kippt.

2. Lösbares Ankerkettenglied (1, 10) nach Anspruch 1, wobei der Bolzen (7, 11) an einem Ende gelenkig an einem Bügel (5, 10) befestigt ist, der die ringförmige Konfiguration bildet.

3. Lösbares Ankerkettenglied (1, 10) nach Anspruch 2, wobei das Glied (1, 10) ferner einen Sicherungsmechanismus (12, 14a, 14b) umfasst, der so beschaffen ist, dass er den Bolzen (7, 11) am Bügel (5, 15) des Glieds (1, 10) sichert, wenn sich das Glied (1, 10) in einer geschlossenen Position befindet.

4. Lösbares Ankerkettenglied (1, 10) nach einem der vorangehenden Ansprüche, wobei der Bolzen (7, 11) an einem ersten Ende an einem freien Schenkel (5e) eines U-förmigen Teils (5b) des Glieds (1, 10) angelenkt ist und das gegenüberliegende zweite Ende (7a, 11a) des Bolzens (7, 11) zur Aufnahme durch eine komplementäre Schnittstelle (5f, 15b) an einem freien Ende eines gegenüberliegenden U-förmigen Teils (5a, 15a) geeignet ist.

5. Lösbares Ankerkettenglied (1, 10) nach einem der Ansprüche 1 bis 4, wobei der Sicherungsmechanismus (12, 14, 16) ein Stift (12) ist, der in Durchgangslöcher (14, 16) eingeführt werden kann, die jeweils in den komplementären Schnittstellen (11a, 15b) angeordnet sind.

6. Lösbares Ankerkettenglied (1, 10) nach Anspruch 5, wobei der Bolzen (12) als längliches Element mit mindestens zwei Durchmessern (12a, 12b, 12c) ausgebildet ist.

7. Lösbares Ankerkettenglied (1, 10) nach einem der Ansprüche 4 bis 6, wobei der Bolzen (12) durch ein ROV-Werkzeug installiert oder entfernt ist.

8. Lösbares Ankerkettenglied (1, 10) nach einem der Ansprüche 4 bis 6, wobei der Bügel (15) mindestens einen Vorsprung (15c) und der Bolzen (11) mindestens eine Kerbe (11b) aufweist, wobei die mindestens eine Kerbe (11b) und der mindestens eine Vorsprung (15c) so angeordnet sind, dass sie miteinander zusammenpassen, wenn der Bolzen (11) und der Bügel (15) in der geschlossenen Position in Eingriff sind.

9. Lösbares Ankerkettenglied (1, 10) nach einem der vorhergehenden Ansprüche, wobei der Bolzen (7) an einem Ende an einem freien Schenkel (5e) eines U-förmigen Teils (5b) des Glieds (1) angelenkt ist und am gegenüberliegenden Ende (7a) des Bolzens (7) von einer komplementären Schnittstelle (5f) an einem gegenüberliegenden freien Schenkel (5d) eines gegenüberliegenden U-förmigen Teils (5a) aufgenommen ist, die in der Lage ist, die Zugkraft zwischen dem gegenüberliegenden freien Schenkel (5d) und dem Bolzen (7) zu übertragen.

10. Lösbares Ankerkettenglied (1, 10) nach Anspruch 9, wobei die Schnittstelle (5f, 7a) ein Paar von Zapfen (5g) am Ende eines freien Endes (5d) des Bügels (5) und ein Paar von komplementären Kerben (7a) am Ende des Bolzens (7) umfasst.

11. Lösbares Ankerkettenglied (1, 10) nach Anspruch 10, wobei das Glied (1) elastisch verformbar ist und die Schnittstelle (5f, 7a) bei Verformung das freie Ende (5d) und den Bolzen (7) in einem festen Griff verriegelt, der ein Öffnen des Glieds (1) verhindert.

12. Lösbares Ankerkettenglied (1, 10) nach einem der vorhergehenden Ansprüche, wobei der Steg (6) an beiden Enden mit dem lösbaren Kettenglied (1, 10) verschraubt ist.

13. Lösbares Ankerkettenglied (1, 10) nach einem der vorhergehenden Ansprüche, wobei das Glied (1, 10) eine längliche Form aufweist.

14. Verfahren zum Geschlossenhalten eines lösbaren Ankerkettenglieds (1, 10) nach einem der Ansprüche 1 bis 13, wobei das Verfahren einen der folgenden Schritte umfasst:
- Hinzufügen von Gewicht zu dem Verbindungsglied (1), um das Verbindungsglied (1) elastisch zu verformen, um die ringförmige Konfiguration und den Bolzen (7) an dem jeweiligen freien Ende miteinander zu verriegeln, oder
- Sichern der ringförmigen Konfiguration (15) und des Bolzens (11) an dem jeweiligen freien Ende mit einem Sicherungsmechanismus (12, 14, 16).

## Revendications

1. Maillon de chaîne d'amarrage libérable (1, 10) à suspendre sur une élingue de câble métallique (3), ladite maillon de chaîne d'amarrage libérable (1, 10) présentant une configuration généralement en forme d'anneau (5, 15) avec un côté du maillon (1, 10) pouvant être ouvert ou fermé par un boulon (7, 11), et une âme (6) s'étendant transversalement à l'intérieur de ladite forme d'anneau pour relier des côtés opposés dudit maillon (1, 10), dans lequel ledit maillon de chaîne d'amarrage (1, 10) comprend un arc (5) présentant deux parties opposées en forme de U (5a), 5b) et une partie de connexion droite (5c) interconnectant une jambe respective des parties en U (5a, 5b), ladite âme (6) s'étend de manière oblique par rapport à un axe transversal dudit maillon (1, 10), **caractérisé en ce qu'**en utilisation, lorsqu'une chaîne d'amarrage est fixée au maillon libérable (1, 10) dans une position entre la partie en U (5a) du maillon libérable (1, 10) et l'âme (6), cette orientation oblique de l'âme (6) agit pour déplacer l'élingue de câble métallique (3) dans le coin entre la partie d'âme (6) et la partie de connexion droite (5c) lorsqu'une traction est exercée sur l'élingue (3) de telle sorte que lorsqu'une force de levage provenant de l'élingue (3) est appliquée à ladite âme (6), le maillon (1, 10) va basculer vers le côté du maillon (1, 10) présentant le boulon (7, 11).

2. Maillon de chaîne d'amarrage libérable (1, 10) selon la revendication 1, dans lequel ledit boulon (7, 11) est fixé de manière articulée dans une extrémité à un arc (5, 10) formant la configuration en forme d'anneau.

3. Maillon de chaîne d'amarrage libérable (1, 10) selon la revendication 2, dans lequel ledit maillon (1, 10) comprend en outre un mécanisme de fixation (12, 14a, 14b) adapté pour fixer le boulon (7, 11) à l'arc (5, 15) du maillon (1, 10) lorsque le maillon (1, 10) est dans une position fermée.

4. Maillon de chaîne d'amarrage libérable (1, 10) selon l'une quelconque des revendications précédentes, dans lequel ledit boulon (7, 11) est articulé au niveau d'une première extrémité à une branche libre (5e) d'une partie en forme de U (5b) dudit maillon (1, 10), et la seconde extrémité opposée (7a, 11a) dudit boulon (7, 11) est adaptée pour être reçue par une interface complémentaire (5f, 15b) sur une extrémité libre d'une partie en forme de U opposée (5a, 15a).

5. Maillon de chaîne d'amarrage libérable (1, 10) selon l'une quelconque des revendications 1 à 4, dans lequel ledit mécanisme de fixation (12, 14, 16) est une broche (12) adaptée pour être insérée dans des trous traversants (14, 16) agencés dans les interfaces complémentaires (11a, 15b), respectivement.

6. Maillon de chaîne d'amarrage libérable (1, 10) selon la revendication 5, dans lequel la broche (12) est mise en forme comme un élément allongé présentant au moins deux diamètres (12a, 12b, 12c).

7. Maillon de chaîne d'amarrage libérable (1, 10) selon l'une quelconque des revendications 4 à 6, dans lequel la broche (12) est installée ou retirée par un outil ROV.

8. Maillon de chaîne d'amarrage libérable (1, 10) selon l'une quelconque des revendications 4 à 6, dans lequel l'arc (15) comprend au moins une saillie (15c) et le boulon (11) comprend au moins une encoche (11b), ladite au moins une encoche /11b) et ladite au moins une saillie (15c) étant agencées de sorte qu'elles s'apparient l'une avec l'autre lorsque le boulon (11) et l'arc (15) sont mis en prise dans la position fermée.

9. Maillon de chaîne d'amarrage libérable (1, 10) selon l'une quelconque des revendications précédentes, dans lequel ledit boulon (7) est articulé au niveau d'une extrémité à une branche libre (5e) d'une partie en forme de U (5b) dudit maillon (1), et au niveau l'extrémité opposée (7a) dudit boulon (7) est reçu par une interface complémentaire (5f) au niveau d'une branche libre opposée (5d) d'une partie en forme de U opposée (5a), qui est capable de transférer une tension entre la branche libre opposée (5d) et le boulon (7).

10. Maillon de chaîne d'amarrage libérable (1, 10) selon la revendication 9, dans lequel l'interface (5f, 7a) comprend une paire de chevilles (5g) au niveau de l'extrémité d'une extrémité libre (5d) de l'arc (5) et une paire d'encoches complémentaires (7a) au niveau de l'extrémité du boulon (7).

11. Maillon de chaîne d'amarrage libérable (1, 10) selon la revendication 10, dans lequel le maillon (1) est déformable élastiquement, et lorsqu'il est déformé, l'interface (5f, 7a) verrouille l'extrémité libre (5d) et le boulon (7) dans une prise ferme empêchant une ouverture du maillon (1).

12. Maillon de chaîne d'amarrage libérable (1, 10) selon l'une quelconque des revendications précédentes, dans lequel l'âme (6) est boulonnée au maillon libérable (1, 10) aux deux extrémités.

13. Maillon de chaîne d'amarrage libérable (1, 10) selon l'une quelconque des revendications précédentes, dans lequel la maillon (1, 10) présente une forme oblongue.

14. Procédé de maintien d'une maillon de chaîne d'amarrage libérable (1, 10) fermé selon l'une quelconque des revendications 1 à 13, dans lequel le procédé comprend les étapes consistant à
- ajouter du poids à la maillon (1) afin de déformer le maillon (1) pour verrouiller la configuration en forme d'anneau et le boulon (7) ensemble au niveau de l'extrémité libre respective, ou
- fixer la configuration en forme d'anneau (15) et le boulon (11) ensemble au niveau de l'extrémité libre respective à l'aide d'un mécanisme de fixation (12, 14, 16).
